# EUROPEAN PATENT APPLICATION

(11) **EP 2 716 981 A1**
(43) Date of publication of application: **09.04.2014**
(21) Application number: 13186840.8
(22) Date of filing: 01.10.2013
(51) Int. Cl.: F24D 13/00, H05B 3/14, H05B 3/26, F24D 19/00, F24D 3/16

(54) **High-efficiency heating panel and related method of production**

(30) Priority: 04.10.2012 IT MO20120243
(71) Applicant: Giemme S.n.c. Di Corradini Marco & C., 41011 Campogalliano (IT)
(72) Inventor: Corradidni, Marco, 41011 CAMPOGALLIANO MO (IT); Yazon, Vyacheslav, 41011 CAMPOGALLIANO MO (IT)
(74) Representative: Modiano, Micaela Nadia

(57) **Abstract**

A high-efficiency heating panel (1), comprising at least one electrically conducting heating element (2) which is associated with a covering plate (3) and can be supplied with electric current so as to achieve its heating by the Joule effect, the at least one heating element (2) comprising a core made of dielectric material which is covered by a conducting film based on carbon nanoparticles.

## Description

The present invention relates to a high-efficiency heating panel and related method of production.

Heating panels are known which are powered by electric current and are applied mainly to walls for the heating of an environment. Such panels are provided with a heating element, such as for example an electrical coil, made of metallic material, which when powered, i.e. crossed by electric current, is heated up by the Joule effect, dissipating energy into the surrounding environment in the form of heat. Such panels further comprise a plate for covering the heating element which prevents direct contact with the latter so as to prevent accidental scalding or electrocution owing to the passage of electric current.

Such conventional panels are not devoid of drawbacks including the fact that they have low efficiency in that they dissipate some of the energy that could be used for heating the environment toward the wall on which they are installed. In particular, the heating element radiates heat in all directions, thus also locally heating the wall on which the panel is installed. Such localized heating tends to heat the wall through its entire thickness and hence the outside environment separated by the wall itself.

Another drawback of such conventional panels consists in that substitution of the heating element is required after a high number of operating cycles. In fact, the metallic material that constitutes the heating element is subject to thermal dilations owing to the variation of its internal temperature, expanding in the event of heating and contracting in the event of cooling. Such cyclic dilations over the long term can cause decay of the structure to the point where flaws are created which interrupt the flow of electric current between the terminals for powering the heating element, requiring its substitution in order to restore the operation of the panel.

A further drawback of such conventional panels consists in that they have an uneven distribution of heat over the entire radiating surface. In particular, the generation of heat by the Joule effect varies according to the value of the electric resistance of the electric circuit and, in turn, the value of the resistance is linked to the internal temperature of the conductive material: it follows from this that different localized temperatures of the heating element generate different resistance values and different heat levels. In fact, the central portion of the heating element exchanges less heat with the outside environment than do its ends and, not being able to lower the temperature with such heat exchange, has a higher internal temperature of the conductive material. The difference in internal temperature of the conductive material between the central portion and the ends results in a different distribution of the value of the electric resistance between the different portions, which results in an uneven generation of heat.

The aim of the present invention consists in providing a high-efficiency heating panel that eliminates the drawbacks and overcomes the limitations of the known art, making it possible to increase its yield, by limiting the dispersion of heat toward walls or outside environments.

Within this aim, an object of the present invention is to provide a panel that can be used continuously, even after a high number of operating cycles without requiring the substitution of the heating element.

Another object of the invention consists in providing a panel that enables an even distribution of heat over all its radiating surface.

A further object of the invention consists of providing a panel that is capable of offering the widest guarantees of reliability and safety in use.

A still further object of the invention consists in providing a heating panel that is easy to implement and economically competitive when compared to the known art.

This aim and these and other objects which will become better apparent hereinafter, are all achieved by a high-efficiency heating panel, comprising at least one electrically conducting heating element which is associated with a covering plate and can be supplied with electric current so as to achieve its heating by the Joule effect, **characterized in that** said at least one heating element comprises a core made of dielectric material which is covered by a conducting film based on carbon nanoparticles.

Furthermore, this aim and these and other objects which will become better apparent hereinafter are also achieved by a method for providing a heating panel which comprises a covering plate and at least one heating element and which can be supplied with electric current so as to achieve its heating by the Joule effect, **characterized in that** it comprises:
- a step of providing said covering plate and a core made of dielectric material;
- a step of covering said core with a conducting film based on carbon nanoparticles in order to obtain said at least one heating element;
- a step of positioning said at least one heating element on a laying surface of said covering plate;
- a step of applying adhesive means at least at said laying surface for the connection of said at least one heating element to said covering plate;
- a step of hardening said adhesive means in order to obtain said panel in one piece.

Further characteristics and advantages of the invention will become better apparent from the description of two preferred, but not exclusive, embodiments of a high-efficiency heating panel, which are illustrated by way of non-limiting example in the accompanying drawings wherein:
Figure 1 is an exploded perspective view of a first embodiment of a high-efficiency heating panel, according to the invention;
Figure 2 is an exploded perspective view of a variation of the first embodiment of the panel shown in Figure 1;
Figures 3, 4 and 5 are schematic representations of the method for providing a first embodiment of the panel, according to the invention;
Figures 6 and 7 are perspective views of a second embodiment of the panel applied to a cylindrical conduit, according to the invention;
Figures 8, 9 and 10 are schematic representations of the method for providing a second embodiment of the panel, according to the invention.

With reference to the figures, the high-efficiency heating panel, generally designated by the reference numeral 1, comprises at least one heating element 2 that is associated with a covering plate 3 and which can be supplied with electric current so as to obtain heating by the Joule effect.

According to the invention, the heating element 2 comprises a core made of a dielectric material covered by a conducting film based on carbon nanoparticles.

The covering plate 3 has two mutually opposite surfaces one of which is a laying surface 3a associated with the heating element 2 and one a surface 3b for radiating the heat supplied by the heating element, designed to be facing toward the space to be heated. The laying surface 3a is associated, by adhesive means 5, with a base layer 4 made of insulating material.

In particular, the covering plate 3 can be made of fibrous or composite material comprising an aggregate of fibers selected from the group comprising glass fibers, polypropylene fibers, maize fibers, hemp fibers and aramid fibers. Such aggregate can comprise a single type of fiber or a mixture of several types of fibers. Conveniently, the covering plate 3 also comprises polymeric resins of the thermoplastic type, adapted for processing of the LWRT type. Preferably, the covering plate 3 comprises glass and polypropylene fibers which are plastically deformable following a step of heating to a high temperature.

Alternatively, the covering plate 3 can be made of metal, preferring metals or alloys, such as for example aluminum alloys, with a low specific weight in order to not excessively weigh down the panel 1. In this case the panel 1 includes the insertion of a layer of insulating fabric, not shown in the accompanying figures, which is interposed between the laying surface 3a and the heating element 2. Such layer of fabric has a continuous surface that prevents electrical contact between the heating element 2 and the metal covering plate 3 and at the same time allows the passage of substances in the liquid or semi-liquid state, such as for example adhesives of the thermoplastic type in the substantially fluid state.

Independently of the material of which the covering plate 3 is made, the latter can have, on its surface, a plurality of ribs 7 which are adapted to stiffen the plate, thus preventing accidental impacts from plastically deforming its surface. Optionally, the surface for radiating 3b can be coated by an adhesive film, not shown in the accompanying figures, which is made for example of non-woven fabric or of polyethylene terephthalate, so as to facilitate the adhesion of mortars, or the like, if the panel 1 is to be embedded in masonry in a wall of the space to be heated.

Interposed between the covering plate 3 and the base layer 4, the heating element 2 comprises a core made of a dielectric material, i.e. electrically insulating, and resistant to the forces of pressure and flexion that can be applied on its surface. In particular, the core of the heating element 2 is provided with at least one material selected from the group comprising glass fibers, aramid fibers and thermoplastic polymers. Preferably, the heating element 2 is provided with materials based on polyether ether ketone, usually abbreviated to PEEK, or polyethylene terephthalate, usually abbreviated to PET, in that such materials have high resistance to flexion and compression and a high melting point. The core of the heating element 2 is coated by a thin conducting film based on carbon nanoparticles which allows the passage of electric current supplied by way of at least two power supply electrodes 6. Such conducting film has a variable thickness according to the overall dimensions of the panel 1. Furthermore, the heating element 2 has plan dimensions which are comparable to the covering plate 3 so as to be able to heat the entire surface for radiating 3, and it is in substantially grid form provided with a plurality of through holes for the passage of adhesive means 5 in substantially liquid state.

In fact, the adhesive means 5, in addition to ensuring the adhesion of the base layer 4 to the covering plate 3, ensure the adhesion of the heating element 2 to the laying surface 3a so as to form a substantially sheet-like multi-layer panel 1 in one piece. Such adhesive means 5 comprise an adhesive of the thermoplastic type which, following a step of heating, passes from the solid state to the liquid state. The temporary liquefaction enables the adhesive to penetrate the through holes of the heating element 2 and, as a consequence of its subsequent solidification or hardening, join all the layers with which it is in contact. The adhesive means 5 comprise at least one adhesive film 5a, which is solid at ambient temperature, and which can be easily placed on the covering plate 3 or to the heating element 2 before a step of heating. If such adhesive film 5a is not very fluid or too thin, so as to present an insufficient amount of adhesive to ensure a correct penetration into the grid of the heating element 2 and embed the latter in a single layer of adhesive together with the base layer 4 and the covering plate 3, a second adhesive film 5b is inserted so as to ensure an adhesive layer on each face of the heating element 2.

Finally, the base layer 4 is made of an insulating material which comprises an aerogel with a microporous amorphous structure, preferably associated with a flexible fabric for its handling. In particular, the base layer 4 comprises silicon dioxide with amorphous nanoporous structure, the pores of which have a size of approximately 0.01 micrometers. Such structure, although having a thickness of the order of a few millimeters, confers a high insulating capacity on the base layer 4. Advantageously, the base layer 4 can be a layer of aerogel of the type produced by Aspen Aerogels Inc. and known by the commercial names Spaceloft®, Crygel®, Pyrogel® and the like.

The high-efficiency heating panel 1, described above, can be provided with a method comprising a covering plate 3 and at least one heating element 2 which can be supplied with electric current so as to achieve its heating by the Joule effect.

According to the invention, the production method comprises a step of providing the covering plate 3 and a core made of dielectric material. Subsequently, a step is carried out of covering the core with a conducting film based on carbon nanoparticles in order to obtain the heating element 2. Such covering step can be conveniently carried out by way of painting the core with paint based on carbon nanoparticles, such as for example paints sold by the Frenzelit Werke GmbH company. At least two power supply electrodes 6 are applied, preferably made of copper, in order to power the heating element. This is followed by performing a step of positioning the heating element 2 on a laying surface 3a of the covering plate 3, and a step of applying adhesive means 5 at least to this laying surface. A step of hardening the adhesive means 5 is then carried out in order to obtain the panel 1 in one piece.

In particular, the adhesive means 5 comprise at least one adhesive film 5a which can be positioned between the laying surface 3a and the heating element 2 or directly on the heating element 2 placed on the covering plate 3. If a second adhesive film 5a is also present, then both the faces of the heating element 2 are in contact with the adhesive means 5. Such adhesive films 5a and 5b are adhesives of the thermoplastic type, solid at ambient temperature, and therefore the application step requires a step of placing, or applying, at least one of the adhesive films 5a and 5b on either or both of the heating element 2 and the laying surface 3a and a subsequent step of heating to a temperature that can vary between 170°C and 250°C in order to activate the adhesive means 5, i.e. for the change of state from solid to liquid or semi-liquid.

The production method also comprises a step of compressing the covering plate 3, the adhesive means 5 and the heating element 2 so as to adequately compact the panel 1 obtained. Such compression step is carried out at a pressure that can vary between 1 and 5 bar and must be performed when the adhesive means 5 are still active and before the hardening step has begun, or before it has reached an advanced stage, thus preventing the gluing of the different elements together; therefore the compression step is performed before or at the same time as the hardening step begins.

Furthermore, there is a step of providing and juxtaposing a base layer 4 made of insulating material on the adhesive means 5. Such step of juxtaposing occurs before the end of the hardening step so that the adhesive means 5, which are still active, make it possible to glue the base layer 4 to the covering plate 3.

Advantageously, the compression step mentioned above requires the use of molds 100 which are adapted to plastically deform the covering plate 3, so as to define the final shape of the plate itself. In fact, the covering plate 3 made of composite material comprises a matrix made of material of the thermoplastic type and a plurality of reinforcing fibers. The formation of the covering plate 3 requires a preliminary heating step in order to soften the matrix and a subsequent compression step for its plastic deformation. It follows from this that the step of heating to a temperature comprised between 170°C and 250°C, described previously, makes it possible to simultaneously soften the matrix of the covering plate 3 and activate the adhesive means 5, while the step of compressing at a variable pressure comprised substantially between 1 and 5 bar enables the simultaneous adhesion of all the layers of the panel 1 thanks to the presence of the active adhesive means 5 and the plastic deformation of the covering plate 3. Advantageously, the core of the heating element 2 is made of a material that can withstand the pressures present in the compression step.

The steps of heating and compression can be successive if ovens, or adapted heated chambers, are used for the heating, and molds are used for the compression of the panel 1, while they can be simultaneous if molds 100 are used which are provided with heating means 101 that enable the heating both of the layer of covering 3, and of the adhesive means 5.

Advantageously, the use of molds 100 thus described makes it possible to execute the steps of positioning, placement and juxtaposition, the heating step and the compression step almost simultaneously, i.e. in a range of time substantially less than 1 minute in order to obtain the panel 1 in one piece. In particular, the various layers which define the panel 1 are placed onto each other inside one of the molds 100. Subsequently, the two molds 100 are brought together while being heated thanks to the presence of the heating means 101, thus making the steps of heating and compression occur simultaneously. Finally, the two molds 100 are separated from each other, thus releasing the panel 1 that has been compacted and plastically deformed. The panel 1 thus obtained, away from the heating means 101, ends the step of hardening the adhesive means 5.

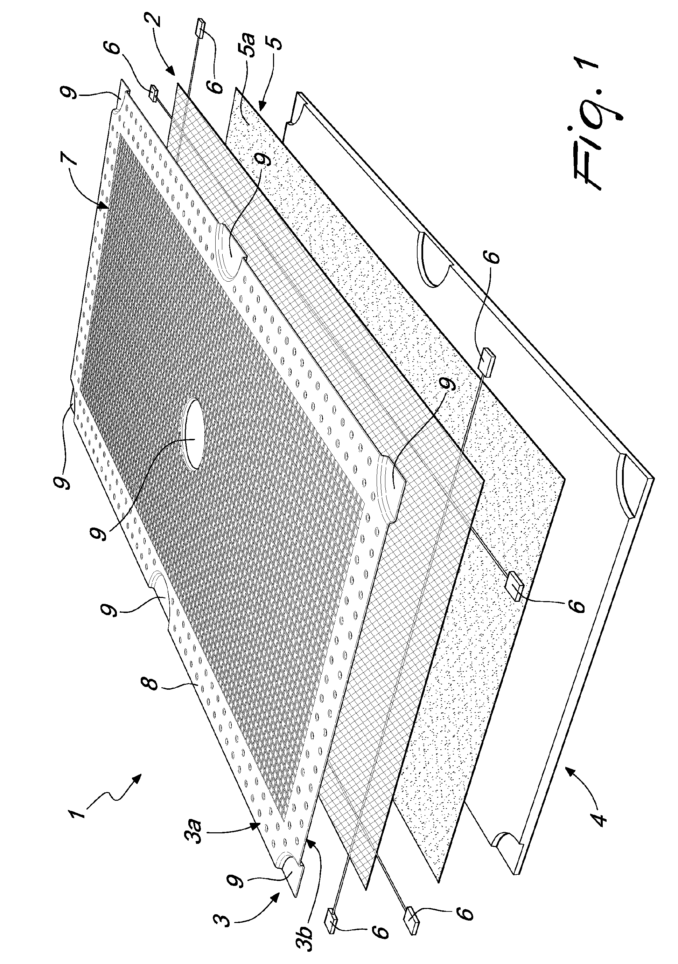

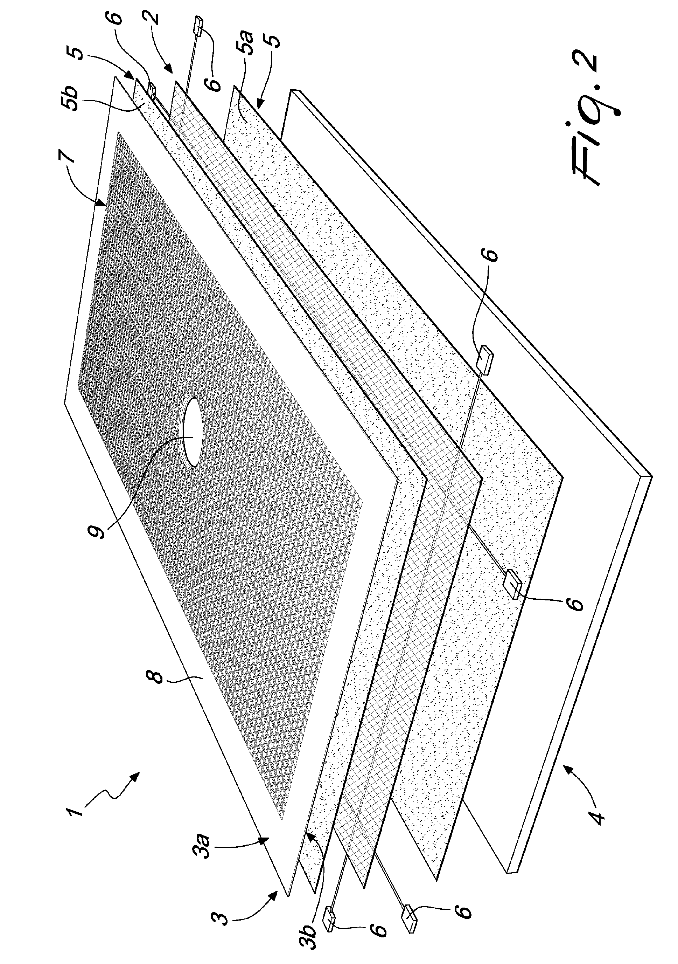

In a first embodiment shown in Figure 1, the panel 1 has a substantially flat quadrangular shape provided with a perimetric band 8 in which recessed installation areas 9 are provided which are adapted to accommodate heads of nails, inserts or anchoring elements, for the wall installation of the panel 1. Furthermore, a central installation area 9 is provided so as to adequately secure the panel to the surface on which it is to be installed. The conductive element 2 is a grid provided with two power supply electrodes 6 for each side of the panel 1 so as to form different types of electric circuits with any adjacent panels 1. In a variation of such first embodiment, shown in Figure 2, the panel 1 has completely flat perimetric bands 8 and is provided with a first 5a and a second adhesive film 5b which are arranged on the two opposite surfaces of the heating element 2. The covering plate 3 is composed of a mixture of polypropylene and of glass fibers, respectively 45% and 55% by content, while the adhesive films 5a and 5b are based on polypropylene. Specifically, the adhesive films 5a and 5b are a film with a thickness comprised between 25 and 300 micrometers the surface of which is perforated in order to ensure an excellent breathability of the panel 1. Furthermore, such film is free from plasticizers, such as for example PVC, which might not adequately amalgamate with the polypropylene of the covering plate 3. In fact, the presence of this component, i.e. polypropylene, both in the adhesive means 5 and in the covering plate 3, enables a perfect mutual adhesion of the two elements, preventing detachments over the long term. In other variants, the adhesive films 5a and 5b can be multilayer adhesive films, such as for example Dow Integral® 932.

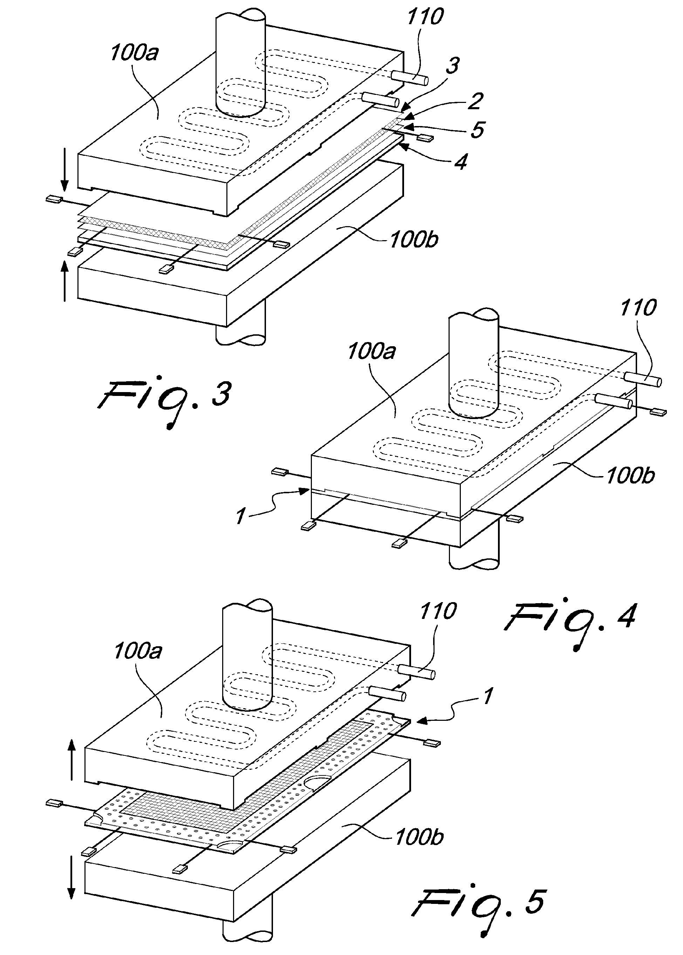

Advantageously, the panel 1 is obtained by way of using molds 100 which comprise a punch die 100a provided with a contoured face, directly facing toward the corresponding matrix die 100b, which is conveniently defined in order to plastically deform the covering plate 3 during the compression step and the heating step. In particular, as illustrated in Figure 3, the base layer 4, the adhesive film 5a, the heating element 2 and the covering plate 3, substantially planar and still to be formed, are placed on the matrix die 100b. Subsequently the heating means 101 are activated and the compression step is carried out by bringing the punch die 100a and the corresponding matrix die 100b together, as illustrated in Figure 4, for a period substantially less than a minute in order to enable the complete softening of the matrix die and the activation of the adhesive film 5a. Finally, the punch die 100a and the corresponding matrix die 100b are separated in order to retrieve the formed panel 1. In other variants of the method, there can be a different insertion of the film 5a, i.e. it can be placed on the heating element 2, or there can be the insertion of the second film 5b.

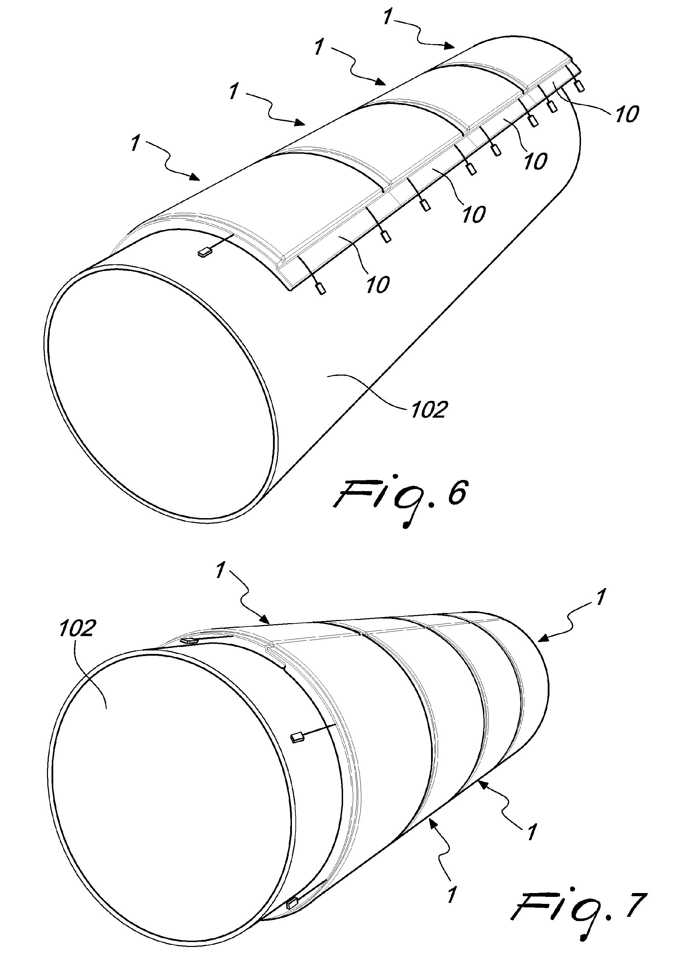

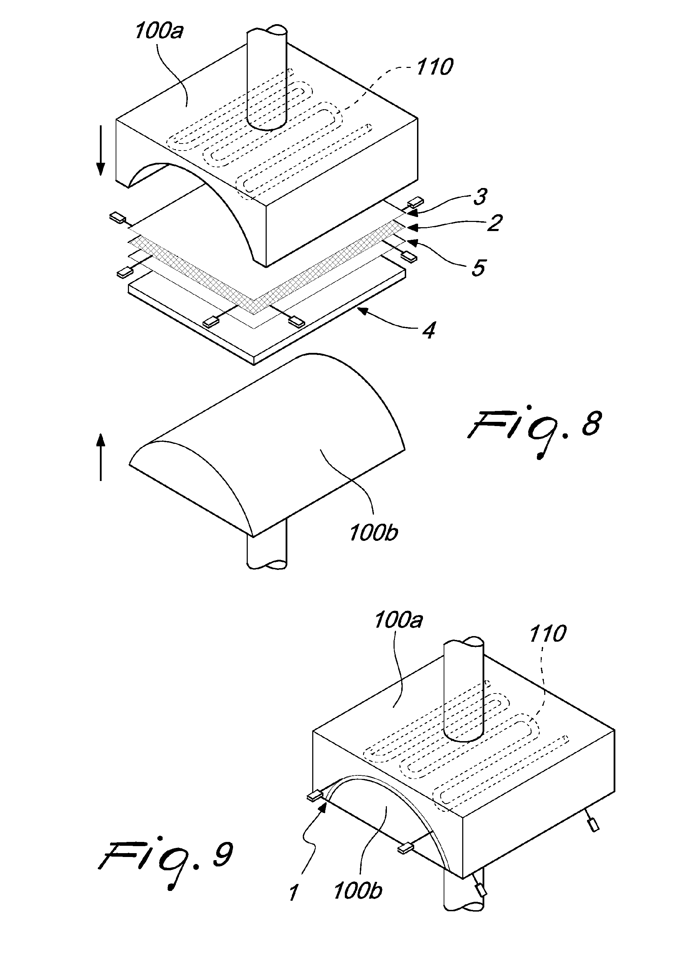

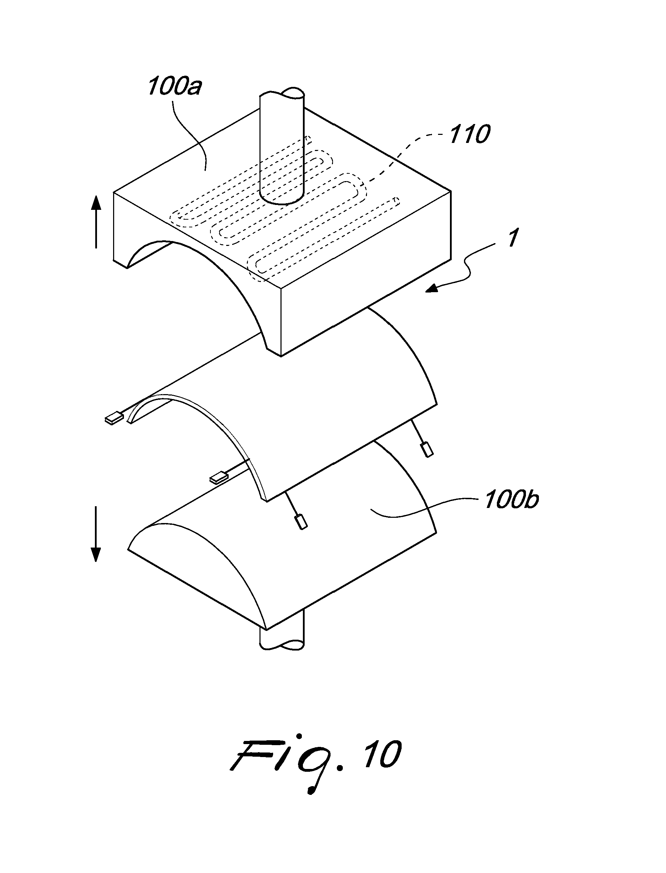

In a second embodiment, illustrated in Figures 6 and 7, the panel 1 has a substantially semicircular shape. Each of the panels 1 has at least two opposite ends which are provided with connection means 10 of the male-female type. Advantageously, the panels 1 are positioned consecutively with respect to each other so as to completely enclose the outer surface of a column 102. Conveniently, each means for connection 10 enables the interlocking or connection of two panels 1 so as to form a heating ring around the column 102. This second embodiment of the panel 1 is also obtained by way of conveniently shaped molds 100, which are illustrated schematically in Figures 8, 9 and 10.

The possibility is not ruled out however of using different types of molds 100 in order to provide panels 1 with three-dimensional shapes that are conveniently defined in order to allow the perfect adhesion of the panel to different and complex surfaces, such as for example internal portions of vehicle cabins.

The panel 1 thus obtained can be used for heating spaces, requiring its installation on an inner perimetric portion of the room. In particular, the installation of the panel 1 requires the fixing thereof to the installation surface by way of anchoring elements, bringing the base layer 4 into direct contact with the installation surface. Subsequently, the different adjacent panels 1 can be mutually connected in series or in parallel and powered with low voltage electric current. Furthermore, the installed panels 1 can be covered by mortars, plasters, wall tiles or the like, in order to give the wall, ceiling, or floor a compact and pleasant appearance.

In practice it has been found that the high-efficiency heating panel, according to the present invention, achieves the intended aim and objects in that it makes it possible to increase its yield, by limiting the dispersion of heat toward walls or outside environments. In particular, the portion of heat emitted by the heating element toward the installation surface is not dispersed through the wall itself, but is forced back toward the space to be heated thanks to the presence of the base layer which, by insulating, prevents the passage of the heat. It follows from this that almost all the heat generated is directed toward the space to be heated. Furthermore, the presence of aerogel in the base layer confers a high insulating capacity even to non-functioning panels and with negligible space occupation thicknesses which do not considerably limit the internal volume of the room to be heated.

Another advantage of the panel, according to the invention, consists in that it enables a continuous use of the panel without requiring any substitution of the heating element even after a high number of operating cycles. In fact, the conducting film based on carbon nanoparticles is an excellent conductor which, by the Joule effect, degrades the electric current into heat, but is not subject to thermal dilations owing to the variation of internal temperature. The absence of thermal variations does not create dilations and contractions that could generate, over the long term, flaws or interruptions in the electric circuit.

A further advantage of the panel, according to the invention, consists in that it has an even distribution of the heat on the entire surface for radiating. In fact, given that the value of electric resistance of the conducting film based on carbon nanoparticles does not vary with the change of temperature, all the conducting film will provide the same heat on all of its surface, even in regions with a greater heat exchange with the surrounding environment.

A still further advantage of the panel, according to the invention, consists in that it reduces the risks of electrocution with respect to conventional heating panels operating with high voltage electric currents (110V-220V). In fact, the conducting film based on carbon nanoparticles requires, for its heating, low voltage current (lower than 25V) thus limiting the risks of electrocution in the event of accidental contact. Furthermore, such panels can be powered by low voltage photovoltaic systems which as is known are installed on roofs of dwellings, thus rendering the dwelling independent of the local electricity grid for its heating.

Furthermore, the panel thus described can be used for controlling temperatures in electronic devices, of medical devices or in order to prevent the freezing of fluids in plumbing systems.

The high-efficiency heating panel, thus conceived, is susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements.

The disclosures in Italian Patent Application No. M02012A000243 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A high-efficiency heating panel (1), comprising at least one electrically conducting heating element (2) which is associated with a covering plate (3) and can be supplied with electric current so as to achieve its heating by the Joule effect, **characterized in that** said at least one heating element (2) comprises a core made of dielectric material which is covered by a conducting film based on carbon nanoparticles.

2. The panel (1) according to claim 1, **characterized in that** said covering plate (3) comprises two mutually opposite main surfaces (3a, 3b), one (3a) for laying, which is associated with said at least one heating element (2), and the other one (3b) for radiating the heat supplied by said heating element, and **in that** it comprises at least one base layer (4) which is made of insulating material and is associated with said laying surface (3a) by way of adhesive means (5), said at least one heating element (2) being interposed between said base layer (4) and said laying surface (3a).

3. The panel (1) according to claims 1 and 2, **characterized in that** said at least one heating element (2) comprises at least two power supply electrodes (6) which are connected electrically to said conducting film and **in that** said core is made with at least one dielectric material selected from the group that comprises glass fibers, aramid fibers and thermoplastic polymers.

4. The panel (1) according to one or more of the preceding claims, **characterized in that** said covering plate (3) is made of fibrous material which comprises an aggregate of fibers selected from the group that comprises glass fibers, polypropylene fibers, maize fibers, hemp fibers, and **in that** said base layer (3) is made of insulating material comprising an aerogel with a microporous amorphous structure.

5. The panel (1) according to one or more of claims 1 to 3, **characterized in that** said covering plate (3) is made of metal and **in that** said base layer (4) is made of insulating material comprising an aerogel with a microporous amorphous structure.

6. The panel (1) according to one or more of the preceding claims, **characterized in that** said adhesive means (5) are of the thermoplastic type and said at least one heating element (2) is shaped so as to define a grid which is provided with a plurality of through holes for the accommodation of said adhesive means (5) for the connection of said covering plate (3) and said base layer (4), said at least one heating element (2) having plan dimensions which are comparable to said laying surface (3a).

7. A method for providing a heating panel (1) which comprises a covering plate (3) and at least one heating element (2) and which can be supplied with electric current so as to achieve its heating by the Joule effect, **characterized in that** it comprises:
- a step of providing said covering plate (3) and a core made of dielectric material;
- a step of covering said core with a conducting film based on carbon nanoparticles in order to obtain said at least one heating element (2);
- a step of positioning said at least one heating element (2) on a laying surface (3a) of said covering plate (3);
- a step of applying adhesive means (5) at least at said laying surface (3a) for the connection of said at least one heating element (2) to said covering plate (3);
- a step of hardening said adhesive means (5) in order to obtain said panel (1) in one piece.

8. The method according to claim 7, **characterized in that** said adhesive means (5) are of the thermoplastic type and comprise at least one adhesive film (5a) and said application step comprises a step of placing said at least one film (5a) in the solid state on either or both of at least one heating element (2) and said laying surface (3a) and a subsequent step of heating to a temperature that can vary between 170°C and 250°C for the activation of said adhesive film.

9. The method according to claims 7 and 8, **characterized in that** it comprises a step of compressing said covering plate (3), said at least one adhesive film (5a) and said at least one heating element (2) at a pressure that can vary between 1 and 5 bar, said compression step preceding or being simultaneous with the beginning of said hardening step.

10. The method according to one or more of claims 7 to 9, **characterized in that** it comprises a step of juxtaposing a base layer (4) made of insulating material on said at least one adhesive film (5a), said juxtaposition step preceding the end of said hardening step.

11. The method according to one or more of claims 7 to 10, **characterized in that** said compression step comprises the use of molds (100) which are adapted to deform plastically said covering plate (3) heated previously in said heating step.

12. The method according to one or more of claims 7 to 11, **characterized in that** said steps of positioning, placement and juxtaposition, said heating step and said compression step are substantially mutually simultaneous in an interval that is substantially less than 1 minute in order to obtain said panel (1) in one piece.
